# EUROPÄISCHE PATENTSCHRIFT

(11) **EP 1 750 825 B1**
(45) Veröffentlichungstag und Bekanntmachung des Hinweises auf die Patenterteilung: **05.03.2008**
(21) Anmeldenummer: 05740617.5
(22) Anmeldetag: 13.05.2005
(51) Int. Cl.: B01D 29/11, B01D 35/30, B01D 46/24

(54) **FILTERELEMENT**
FILTER ELEMENT
ELEMENT FILTRE

(30) Priorität: 02.06.2004 DE 102004026862
(43) Veröffentlichungstag der Anmeldung: 14.02.2007
(73) Patentinhaber: HYDAC FILTERTECHNIK GMBH, 66280 Sulzbach/Saar (DE)
(72) Erfinder: MERTENS, Helmut, 66292 Riegelsberg (DE); SCHUNK, Andreas, 66914 Waldmohr (DE)
(74) Vertreter: Bartels, Martin Erich Arthur
(86) Internationale Anmeldenummer: PCT/EP2005/005216
(87) Internationale Veröffentlichungsnummer: WO 2005/118103

(56) Entgegenhaltungen:
- DE-A1- 3 012 575
- DE-A1- 3 838 720
- DE-A1- 19 857 631
- DE-B1- 1 611 077

## Beschreibung

Die Erfindung bezieht sich auf ein Filterelement, das zur Filterung von Fluiden in einem Filtergehäuse aufnehmbar und in der Art einer sich entlang einer Längsachse erstreckenden Filterkerze in Form eines Körpers ausgebildet ist, bei dem ein innerer Fluidraum von Filtermaterial umgeben ist, das den inneren Fluidraum von einem äußeren Fluidraum innerhalb des Filtergehäuses trennt.

Filterelemente dieser Art sind handelsüblich. In Verbindung mit Fluidanlagen verschiedenster Art finden solche Filterelemente verbreitet Anwendung für die Filterung von Verfahrensflüssigkeiten, Druckflüssigkeiten, wie Hydraulikölen, flüssiger Kraft- und Schmierstoffen, zur Aufbereitung flüssiger Medien und dergleichen. In vielen Fällen steht bei Fluidanlagen, bei denen die Filterelemente zum Einsatz kommen, nur ein begrenzter Nutzraum für Einbau oder Anbau der Anlagenteile zur Verfügung, die die betreffenden, filterkerzenartigen Filterelemente enthalten. Andererseits ist, um entsprechend große Volumenströme filtrieren zu können, eine ausreichende Größe der von dem Filterelement oder den Filterelementen zur Verfügung gestellten Filterfläche erforderlich.

Demgemäß sind in der Fachwelt bereits Überlegungen angestellt worden, wie man die Filteroberfläche von Filterkerzen in Filtergehäusen optimieren kann. Ausgehend von den runden Filterkerzen, die bei Mehrfachanordnung zu großen ungenutzten Volumina in den Filterzwischenräumen führen können, hat man demgemäß im Stand der Technik bereits Filter bereit gestellt, die im Vergleich zu den kreisförmigen Umrissen eine größere Pakkungsdichte innerhalb des Gehäuses und somit eine größere Filterfläche ermöglichen. So ist es durch die Dokumente DE 198 57 631 A1, DE 38 38 720 A1 und DE 30 12 575 A1 bekannt, zur Erzielung einer vergrößerten Filterfläche von der im Durchschnitt betrachteten Kreisform abzugehen und Filterquerschnitte unter anderem in Dreieckform, in Polygonform oder als abgerundetes Vieleck zu verwenden.

Des weiteren ist es durch die DE 16 11 077 B1 bekannt, einen Haltestab einer runden Filterkerze als Gleichdick auszubilden, um dergestalt die Neigung zum Sedimentieren mitgerissener Teilchen im Inneren der Filterkerze zwischen dem Spalt-Filterelement und dem Haltestab zu verbessern; allein die dahingehend bekannte Ausgestaltung trägt nichts mit dazu bei, die Filteroberfläche von Filterkerzen zu vergrößern, die bei der bekannten Lösung, wie dargelegt, gleichfalls im Querschnitt betrachtet kreisförmig ausgebildet ist.

Ausgehend von diesem Stand der Technik stellt sich die Erfindung die Aufgabe, ein Filterelement zu schaffen, das gegenüber den bekannten Lösungen noch weiter optimiert ist betreffend das Verhältnis von Filterfläche zu benötigtem Einbauraum, um dergestalt Anlagenteile, die für die Filterung betreffender Fluide vorgesehen sind, demgegenüber besonders platzsparend auszubilden.

Erfindungsgemäß ist diese Aufgabe durch ein Filterelement gelöst, das die Merkmale des Patentanspruches 1 in seiner Gesamtheit aufweist.

Gegenüber den bekannten Filterelement-Lösungen zeichnet sich das erfindungsgemäße Filterelement nach dem kennzeichnenden Teil des Anspruches 1 dadurch aus, dass es auf zumindest einem Teil seiner Länge einen speziellen Umriß in Form eines von den bekannten Querschnittsformen abweichenden Gleichdickes besitzt. Bekanntlich ist der Umfang eines Kreises gleich dem Umfang eines von der Kreisform abweichenden entsprechenden Gleichdickes. Dementsprechend ist bei einem Filterelement, bei dem der Umfang des Körpers der Filterkerze die Größe der Filterfläche bestimmt, diese Filterfläche bei einer Querschnittsform in Form des Gleichdickes genau so groß wie bei einem Querschnitt in Form eines Kreises mit gleichem Durchmesser. Die von der Kreisform abweichende Form des Gleichdickes ermöglicht es jedoch, in einem gegebenen Einbauraum eine größere Filterfläche unterzubringen, als dies bei einem Filterelement kreiszylindrischer Querschnittsform möglich wäre. Die von der Kreisform abweichende Form des Gleichdickes gestattet es, das Filterelement in Anpassung an die gegebenen Grenzen des Einbauraumes platzsparend so zu integrieren, dass im gegebenen Einbauraum ein größerer Umfang des Filterelementes und damit eine größere Filterfläche zur Verfügung steht, als dies bei Einbau eines zylindrischen Filterelementes am gleichen Einbauort möglich wäre. Entsprechende Überlegungen gelten auch für den Fall, dass, wie im Stand der Technik gleichfalls aufgezeigt, die Filterquerschnitte in Dreieckform, in Polygonform oder als abgerundetes Vieleck ausgebildet sind, obwohl die dahingehenden Lösungen bereits Verbesserungen bieten gegenüber den sonst bekannten Kreisquerschnittsflächen für die Filterelemente.

Vorzugsweise besitzt das erfindungsgemäße Filterelement die Form des Gleichdickes in einem zur Längsachse senkrechten Querschnitt.

Die dem Gleichdick entsprechende Querschnittsform kann gegebenenfalls nur in den für die Unterbringung des Filterelementes wesentlichen oder kritischen Längenabschnitten des Körpers des Filterelementes vorgesehen sein oder sich vorzugsweise über die gesamte Länge des Körpers des Filterelementes erstrecken.

Die Querschnittsform kann ein Reuleaux-Polygon sein, beispielsweise ein Gleichdick, das aus einem gleichseitigen Dreieck mit dessen gerade Schenkel ersetzenden Kreissegmenten gebildet ist.

Gegenstand der Erfindung ist auch eine Filtervorrichtung, die für die Aufnahme mindestens eines Filterelementes, insbesondere eines erfindungsgemäßen Filterelementes, vorgesehen ist und die Merkmale des Patentanspruches 7 aufweist.

Dadurch, dass demgemäß der Umriß des Filtergehäuses eine spezielle Form in Form eines Gleichdickes besitzt, die in Anpassung an die Gleichdick-Querschnittsform des zumindest einen, im Gehäuse aufzunehmenden Filterelementes gewählt ist, eröffnet sich die Möglichkeit, das Filtergehäuse unter Berücksichtigung von sowohl einer speziellen Gleichdick-Querschnittsform des Filterelementes oder der Filterelemente, als auch im Hinblick auf eine vorgegebene Geometrie des zur Verfügung stehenden Einbauraumes in seiner Umrißform so zu optimieren, dass ein platzsparender Einbau einer möglichst großen Filterfläche erreicht wird.

Ein besonders günstiges Verhältnis zwischen Größe der Filterfläche und Gehäusevolumen ist hierbei dann erreichbar, wenn das im Gehäuse aufzunehmende Filterelement eine passende, gleichdicke Querschnittsform besitzt.

Bei Ausführungsbeispielen, bei denen in bekannter Weise der Umriß des Filtergehäuses kreisrund ist und das Filtergehäuse die Form eines Kreiszylinders besitzt, läßt sich ein gutes Verhältnis Filterfläche zu Gehäusevolumen verwirklichen, wenn mehrere Filterelemente in dem Gehäuse aufgenommen sind, die jeweils eine Querschnittsform in Form des Gleichdickes besitzen.

Von so ausgebildeten, erfindungsgemäßen Filterelementen lassen sich in einem kreiszylindrischen Filtergehäuse, das für die Aufnahme von drei üblichen, im Umriß kreisrunden Filterelementen bemessen ist, vier gleichdikke erfindungsgemäße Filterelemente unterbringen. Da der Umfang des kreiszylindrischen, üblichen Filterelementes und des entsprechend gleichdicken, erfindungsgemäßen Filterelementes jeweils gleich groß ist, also jedes der drei bekannten Filterelemente die gleich große Filterfläche zur Verfügung stellt wie jedes der vier erfindungsgemäßen Filterelemente, ist somit die Gesamt-Filterfläche bei Benutzung der erfindungsgemäßen, gleichdikken Filterelemente um ein Drittel größer als bei Verwendung bekannter, kreiszylindrischer Filterelemente.

Nachstehend ist die Erfindung anhand eines in der Zeichnung dargestellten Ausführungsbeispiels im einzelnen erläutert.

Es zeigen:
- Fig. 1: eine Darstellung der Geometrie eines Reulaux-Gleichdickes auf Basis eines gleichseitigen Dreiecks und
- Fig.2: eine stark schematisch vereinfachte Darstellung zur Verdeutlichung der Einbausituation von Filterelementen mit kreisförmigem Querschnitt und von Filterelementen mit Querschnitt in Form eines Gleichdickes in ein kreiszylinderförmiges Filtergehäuse.

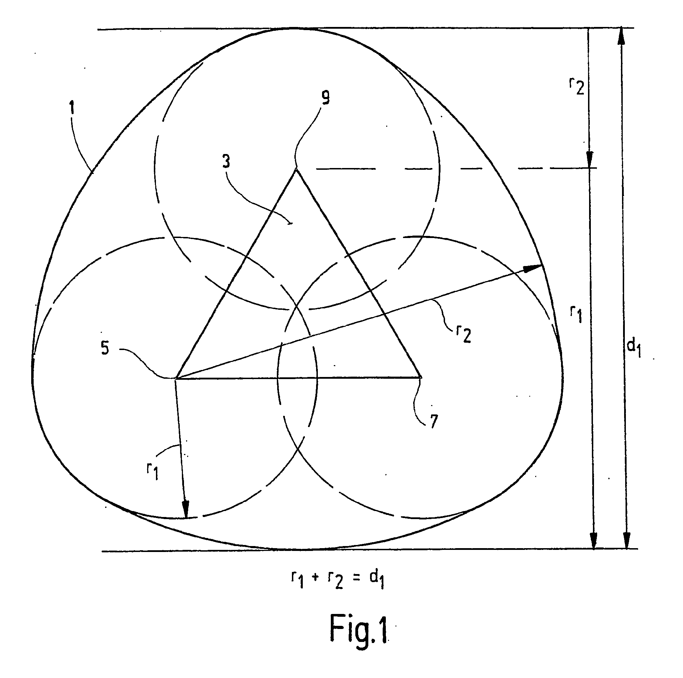

Fig.1 zeigt die Einzelheiten eines Reuleaux-Gleichdicks, dessen Umrißlinie mit 1 bezeichnet ist. Das Gleichdick basiert auf einem gleichseitigen Dreieck 3 mit Eckpunkten 5,7 und 9, wobei jeder Eckpunkt Mittelpunkt eines Kreises mit Radius r₁ und eines Kreisbogens mit dem Radius r₂ ist. Diese beiden Radien sind nur vom Eckpunkt 5 ausgehend in der Figur dargestellt. Die Größe des Radius r₂ ist im Verhältnis zum Radius r₁ so gewählt, dass der entsprechende Kreisbogen sich tangential an den Kreis mit dem Radius r₁ anschließt und sich somit die in Fig.1 mit 1 bezeichnete, geschlossene Umrißlinie ergibt.

Der Durchmesser d₁ des so gebildeten Gleichdickes entspricht der Summe der Radien r₁ und r₂. Der Umfang des Gleichdickes, d.h. die Länge der Umrißlinie 1, ist gleich groß wie der Umfang eines Kreises mit dem Durchmesser d₁.

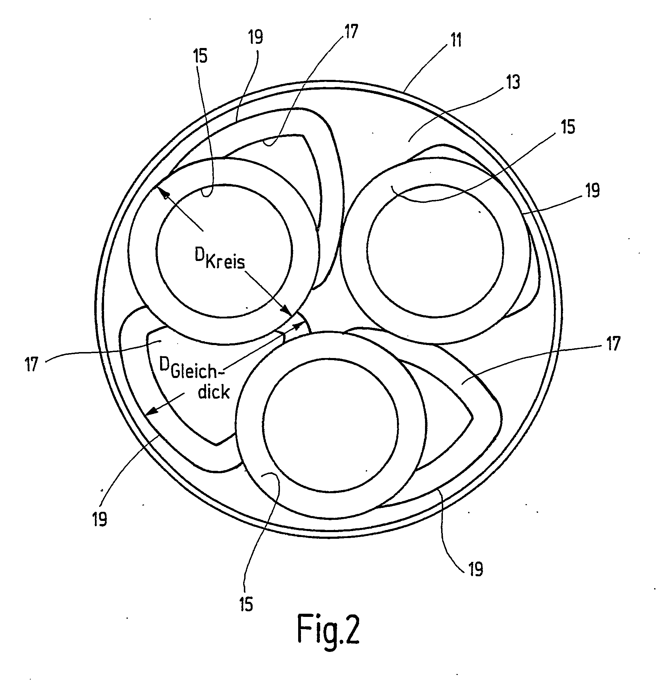

In Fig.2, in der die Wand eines Filtergehäuses mit 11 bezeichnet ist, das eine kreisrunde Grundfläche 13 besitzt, ist die Einbauposition dreier Filterelemente 15 mit kreisrunder Querschnittsform gezeigt. Gleichzeitig ist die Einbausituation von vier gleichdicken Filterelementen 17 gezeigt, deren Querschnittsform dem in Fig.1 dargestellten Reuleaux-Gleichdick entspricht. Dabei ist, wie in Fig. 2 angegeben, der Kreisdurchmesser der Filterelemente 15 gleich dem Durchmesser des Gleichdickes der Filterelemente 17. Wie ersichtlich, sind in dem für drei kreisrunde Filterelemente 15 bemessenen Filtergehäuse 11 vier gleichdicke Filterelemente 17 unterbringbar.

Wie aus Fig.2 ebenfalls zu ersehen ist, sind die gleichdicken Filterelemente 17 jeweils in solcher Lageausrichtung in das Filtergehäuse 11 eingebaut, dass sie mit dem Zentralbereich 19 ihrer mit dem größeren Krümmungsradius kreisbogenförmig gewölbten Außenseite zu der Wand 11 des Filtergehäuses nächstgelegen sind.

## Patentansprüche

1. Filterelement (17), das zur Filterung von Fluiden in einem Filtergehäuse (11) aufnehmbar und in der Art einer sich entlang einer Längsachse erstreckenden Filterkerze in Form eines Körpers ausgebildet ist, bei dem ein innerer Fluidraum von Filtermaterial umgeben ist, das den inneren Fluidraum von einem äußeren Fluidraum innerhalb des Filtergehäuses trennt, **dadurch gekennzeichnet, dass** der Körper des Filterelementes (17) auf zumindest einem Teil seiner auf die Längsachse bezogenen Länge einen Querschnitt in Form eines von der Kreisform abweichenden Gleichdickes (1) besitzt.

2. Filterelement nach Anspruch 1, **dadurch gekennzeichnet, dass** es in einem zur Längsachse senkrechten Querschnitt die Form des Gleichdickes (1) besitzt.

3. Filterelement nach Anspruch 1 oder 2, **dadurch gekennzeichnet, dass** der Querschnitt in bevorzugten Längenbereichen des Körpers des Filterelementes die Form des Gleichdickes (1) besitzt.

4. Filterelement nach Anspruch 1 oder 2, **dadurch gekennzeichnet, dass** der Querschnitt des Körpers des Filterelementes über die gesamte Länge die Form des Gleichdickes (1) besitzt.

5. Filterelement nach einem der Ansprüche 1 bis 4, **dadurch gekennzeichnet, dass** der Querschnitt des Körpers des Filterelementes die Form eines Reuleaux-Polygons (1) besitzt.

6. Filterelement nach Anspruch 5, **dadurch gekennzeichnet, dass** die Querschnittsform ein Gleichdick (1) ist, das aus einem gleichseitigen Dreieck mit dessen gerade Schenkel ersetzenden Kreissegmenten gebildet ist.

7. Filtervorrichtung für die Aufnahme mindestens eines Filterelementes, insbesondere eines solchen (17) nach einem der Ansprüche 1 bis 6, mit einem Filtergehäuse (11) in Form eines Hohlkörpers mit einem Umriß, der die Größe des Innenraumes definiert, der für die Unterbringung des zumindest einen Filterelementes (17) zur Verfügung steht, wobei der Umriß des Filtergehäuses (11) eine Form besitzt, die in Anpassung an die von der Kreisform abweichende Querschnittsform des zumindest einen Filterelementes (17) gewählt ist, **dadurch gekennzeichnet, dass** der Umriß des Filtergehäuses (11) die Form eines Gleichdickes besitzt.

8. Filtervorrichtung nach Anspruch 7 zur Aufnahme von Filterelementen (17) nach Anspruch 6, **dadurch gekennzeichnet, dass** vier nebeneinanderliegende Filterelemente (17) im Innenraum des Filtergehäuses (11) angeordnet sind.

9. Filtervorrichtung nach Anspruch 8, **dadurch gekennzeichnet, dass** der Zentralbereich (19) der mit dem größeren Krümmungsradius des Gleichdickes (1) kreisbogenförmig gewölbten Außenseite der Filterelemente (17) zu der Innenwand des kreiszylindrischen Filtergehäuses (11) nächstgelegen ist.

## Claims

1. Filter element (17) to be received into a filter housing (11) for filtering fluids, and designed in the way of a filter candle in the form of a body extending along a longitudinal axis, where an internal fluid chamber is surrounded by filter material separating the internal fluid chamber from an external fluid chamber within the filter housing, **characterised in that** the body of the filter element (17) has a cross-section with the shape of a curve of constant width (1) deviating from the circular form along at least a part of its length in relation to the longitudinal axis of the same.

2. Filter element according to Claim 1, **characterised in that** the cross-section of the same extending vertical in relation to the longitudinal axis has the shape of a curve of constant width (1).

3. Filter element according to Claim 1 or 2, **characterised in that** the cross-section has the shape of the curve of constant width (1) in preferred longitudinal areas of the body of the filter element.

4. Filter element according to Claim 1 or 2, **characterised in that** the cross-section of the body of the filter element has the shape of the curve of constant width (1) along its entire length.

5. Filter element according to one of the Claims 1 to 4, **characterised in that** the cross-section of the body of the filter element has the shape of a Reuleaux polygon (1).

6. Filter element according to Claim 5, **characterised in that** the cross-sectional shape is a curve of constant width (1) formed from a same-sided triangle with circle segments replacing the straight sides of the same.

7. Filter device for receiving at least one filter element, in particular of the type (17) described in one of the Claims 1 to 6, with a filter housing (11) in the form of a hollow body with a circumference that defines the size of the internal space that is available for installing the at least one filter element (17), whereby the circumference of the filter housing (11) has a shape that is selected to suit the cross-sectional shape of the at least one filter element (17) which deviates from the circular shape, **characterised in that** the circumference of the filter housing (11) has the shape of a curve of constant width.

8. Filter device according to Claim 7 for receiving filter elements (17) according to Claim 6, **characterised in that** four adjacently positioned filter elements (17) are positioned in the internal space of the filter housing (11).

9. Filter device according to Claim 8, **characterised in that** the central area (19) of the circular arc shaped outside of the filter elements (17) with the larger arc of curvature of the curve of constant width (1) is positioned adjacent to the internal wall of the circular cylindrical filter housing (11).

## Revendications

1. Elément (17) filtrant qui, pour la filtration de fluides, peut être reçu dans un boîtier (11) de filtre et est constitué sous la forme d'une pièce à la manière d'une bougie de filtre s'étendant suivant un axe longitudinal, dans lequel un espace intérieur pour du fluide est entouré de matière filtrante, qui sépare à l'intérieur du boîtier de filtre l'espace intérieur pour du fluide d'un espace extérieur pour du fluide, **caractérisé en ce que** la pièce de l'élément (17) filtrant a, sur au moins une partie de sa longueur rapportée à l'axe longitudinal, une section transversale sous la forme d'une courbe (1) de largeur constante s'écartant de la forme circulaire.

2. Elément filtrant suivant la revendication 1, **caractérisé en ce qu'**il a la forme d'une courbe (1) de largeur constante dans une section transversale perpendiculaire à l'axe longitudinal.

3. Elément filtrant suivant la revendication 1 ou 2, **caractérisé en ce que** la section transversale a, dans des parties longitudinales préférées de la pièce de l'élément filtrant, la forme de la courbe (1) de largeur constante.

4. Elément filtrant suivant la revendication 1 ou 2, **caractérisé en ce que** la section transversale de la pièce de l'élément filtrant a la forme de la courbe (1) d'épaisseur constante sur toute la longueur.

5. Elément filtrant suivant l'une des revendications 1 à 4, **caractérisé en ce que** la section transversale de la pièce de l'élément filtrant a la forme d'un polygone (1) de Reuleaux.

6. Elément filtrant suivant la revendication 5, **caractérisé en ce que** la forme de la section transversale est une courbe (1) de largeur constante ayant des segments de cercle remplaçant les côtés droits.

7. Dispositif de filtration pour la réception d'au moins un élément filtrant, notamment d'un élément (17) suivant l'une des revendications 1 à 6, comprenant un boîtier (11) de filtre sous la forme d'une pièce creuse ayant un contour qui définit la dimension de l'espace intérieur, qui est disponible pour loger le au moins un élément (17) filtrant, le contour du boîtier (11) de filtre ayant une forme qui est choisie en adaptation à la forme de la section transversale, s'écartant de la forme circulaire, du au moins un élément (17) filtrant, **caractérisé en ce que** le contour du boîtier (11) de filtre a la forme d'une courbe de largeur constante.

8. Dispositif de filtration suivant la revendication 7 pour la réception d'éléments (17) de filtre suivant la revendication 6, **caractérisé en ce que** quatre éléments (17) filtrants côte à côte sont disposés dans l'espace intérieur du boîtier (11) de filtre.

9. Dispositif de filtration suivant la revendication 8, **caractérisé en ce que** la partie (19) centrale du côté extérieur de l'élément (17) filtrant, partie qui est courbée en forme d'arc de cercle ayant le rayon de courbure le plus grand de la courbe (1) de largeur constante, est la plus proche de la paroi intérieure du boîtier (1) de filtre cylindrique de section circulaire.
